# EUROPEAN PATENT APPLICATION

(11) **EP 4 258 142 A1**
(43) Date of publication of application: **11.10.2023**
(21) Application number: 22382334.5
(22) Date of filing: 07.04.2022
(51) Int. Cl.: G06F 21/36, G06F 21/31, H04L 9/40

(54) **METHOD FOR VALIDATING USER AUTHENTICATION IN INFORMATION SYSTEMS**

(71) Applicant: Neuprotel S.L., 39011 Santander (Cantabria) (ES)
(72) Inventor: PONS GARCÍA, Carlos, Alberto, 28049 MADRID (ES); DEL HIERRO GONZÁLEZ, Javier, 39010 SANTANDER (CANTABRIA) (ES)
(74) Representative: Herrero & Asociados, S.L.

(57) **Abstract**

A method to validate the authentication of users in an information system, which uses a user identifier and a key associated with the identifier made up of a set of elements that are a unit of information identifiable by the user, wherein the validation is based on the user's answers to a test generated with a plurality of steps (p1, p2), at least one group (g11, g12, g13, g14, g21, g22, g23, g34,) for each step, for each step and, in each group, elements whose values are randomly generated and transformed into content elements (e), among which for each group, at least one of the elements that are part of the key stored and defined by the user in a previous stage of credential generation may or may not be included. The user, through his interaction with the information displayed in each step through a user interface of his client device, indicates (201, 202, 203) as an answer in each step of the test, or if there is at least one group that satisfies the condition that at least one of the elements of the group belongs to the user's key, or how many groups or which groups fulfill said condition.

## Description

### OBJECT OF THE INVENTION

The present invention is related to the industry dedicated to information systems such as web platforms, virtual environments, metaverses, mobile applications (app) or desktop applications on computers, laptops, tablets, smartphones or other smart devices/accessories (gadgets), and more specifically, it relates to authentication mechanisms or authentication in such information systems.

More particularly, the present invention relates to a method of validating user authentication in an information system.

### BACKGROUND OF THE INVENTION

Currently there are different types of processes for the authentication of a user in information systems. The most common are briefly described below:
- Identifier + Password: the user registers and authenticates his/her identity in the information system by specifying i) an identifier, which is not supposed to be secret, (user name, email, alphanumeric code, telephone number, passport number or other national or international identification document, etc.) and also ii) a secret password composed of a sequence of alphabetic, numeric, alphanumeric elements and/or symbols written in a certain order and with variable complexity and length.

Within this type of process, there is a variant in which, to perform authentication, the user must specify his/her complete identifier in the information system and his/her password partially. That is, in relation to the password, he/she only has to specify the elements (alphabetical, numeric, alphanumeric and/or symbols) that occupy some specific positions in the secret sequence.

The disadvantages of the "Identifier + Password" type processes are:
- The user has to remember the order of all the elements that make up the complex password.
- This type of process, to date the most common and widespread, has not been unified, that is, each information system has its own registration and authentication system, which means that a user must remember a large number of identifiers and complex passwords.

- Linked to the previous point, a user has to remember an identifier and complex password for each information system means, commonly, the reuse of credentials for all or several information systems. The risk lies in the fact that in the event of involuntary disclosure or theft of said credentials (identifier and password), a security breach would occur by which an attacker could gain access to one, several or all of the information systems in which the user is registered.
- In addition, sometimes the information systems require the modification of the secret password after a period of time, which makes it even more difficult for users to retain the credentials required to perform the authentication.
- They are systems susceptible to attacks by brute force, programs that imitate human behavior (bots) or man-in-the-middle attacks (MitM: man-in-the-middle)
   - Identifier + One-Time Password (OTP): the user registers in the information system by specifying an identifier, which is not supposed to be secret, (user name, email, alphanumeric code, telephone number, passport number or other national or international identification document, etc.) and a secret password made up of a sequence of alphabetic, numeric, alphanumeric elements and/or symbols written in a certain order and with variable complexity and length. Unlike the processes/systems of the previous type, for authentication in this case, the account identifier must be specified but not the password generated when registering the account, instead the OTP password is automatically generated at the time of authentication and the user knows it hen and immediately by receiving an email, SMS, or through third-party applications (such as Google Authenticator).

Therefore, this second type is a very robust authentication process since the OTP password is changeable and has limited validity, either for a single use or for expiration over time.

The disadvantages of the "Identifier + OTP Password" type processes are:
- The authentication process depends directly on the user having access at that moment to the device and channel through which the automatically generated password must be known.
- When the password is received via SMS, man-in-the-middle attacks can be suffered.
- In case of loss or theft of the device (generally smartphone or computer) and without it being blocked or without adequate protection measures, the configured reception channels (generally email or SMS) are accessible to an attacker and, therefore, the attacker can access their content, that is, the passwords automatically received from the different information systems.

Other authentication processes worth mentioning are the following:
- US10587423B2 describes an authentication method based on a cognitive psychology test in a multifactor authentication system. Upon receiving a request to access a secure resource associated with a user, a set of cognitive psychology questions are selected and sent to the user's device for answers. The system generates cognitive psychology data based on the answers given by the user, which is compared with the cognitive psychology profile associated with this user in order to calculate an authentication score. The authentication score is obtained by comparing the cognitive psychology data generated by the system with the cognitive psychology profile associated with the user. Said authentication score is compared to a threshold to validate the user's authentication.
- US11144629B2 describes a multi-factor authentication process that uses graphic passwords and is based on a map of objects whose validation depends on their position. For user authentication, an interface is generated having a plurality of graphical objects at random locations on a user device screen as defined by the object map. Thus, the position/location of the graphics selected by the user is of utmost importance in order to define the coordinates that are validated to authorize access or not.

Therefore, the objective technical problem that arises is to provide users of information systems with a fully (cyber)secure, simplified authentication process (that with a single identifier and key can be used simultaneously in different applications/services/platforms) and being operationally simpler (it is not necessary to enter the password or remember the sequence of its elements, it is only necessary to know these elements).

### DESCRIPTION OF THE INVENTION

The present invention solves the previously identified objective problem, by providing a process for user authentication in information systems based on an identifier and a single key, formed in turn by a set of elements, which, with respect to the existing methods, differs in the verification and validation of said authentication. To validate user authentication, the method proposed herein generates a test with a set of elements with random values, among which the elements that make up (or form) the user's password appear, or not.

In the context of the invention, first, in a previous configuration stage, in which user credentials are generated, the user must define a password made up of a set of elements (for example, alphabetic, numeric or alphanumeric elements, symbols, words, images, colors, sounds, textures, smells, shapes, or any other unit of information that can be identifiable by a user). Likewise, in this credential generation phase, the user must define/configure a unique identifier that unambiguously represents their identity (for example, a text string, an email address, an electronic certificate identifier code, a telephone, a biometric identifier, etc.). The configuration of the credentials (identifier plus password) of the user is prior and, therefore, is not the object of this invention.

One aspect of the invention relates to a method for validating the authentication of a user in an information system as defined in the appended claims.

The advantages of the present invention compared to the previous state of the art and in relation to the currently existing authentication procedures are fundamentally the following:
- The user only has to handle and remember a single identifier and a password to access different information systems. The invention allows the use of the single Identifier + Password pair for authentication simultaneously in different applications/services/platforms (social networks, blogs, electronic commerce or e-commerce, corporate websites, operating systems, websites with private areas in general, etc.) without the need to remember a user-password pair for each application/service/platform. In addition, the user does not have to reveal any of his/her key/password but is limited to indicating whether or not any element of his/her password is in the steps and groups throughout the test (for example, displayed as a graphic object in screen).
- The user does not need to remember the order of the elements forming the key, but it is only required that he/she remember what they are.
- The password remains constant over time and can be modified by the user at any time.
- The invention is not susceptible to attacks by brute force, programs that imitate human behavior (bots), fraudulent techniques on the Internet to capture users' private data (phishing) or man-in-the-middle attacks (MitM: man-in-the-middle). It also guarantees protection against attacks by spying on the user (directly or with cameras or other devices) to obtain their information, a "shoulder surfing" technique (looking over their shoulder), since the user does not indicate their password when performing the authentication. The invention is not based on entering the code sequence of a password on a device screen, but rather it should only be indicated if any of the elements that make up the key (defined prior to the authentication process) appear or not throughout the test proposed herein, for example, in the screen(s) that are shown to the user. For the same reason, the invention protects the user against those people who use the unprotected information that swarms on the Internet to obtain information (fraudsters in the virtual world or "scammers").
- The authentication process that constitutes the invention does not directly depend on having access to a user's device (smartphone or computer) or to a channel (email, SMS or third-party applications such as Google Authenticator).
- In case of massive theft of accounts in a protected information system, the present invention allows all access to all user information systems to be instantly blocked through a single management.
- The operation of the method proposed herein is not hardware dependent.
- With respect to the previous solution described in US10587423B2, wherein the questions are not random, but depend on a psychological test that is previously performed on the user, the present invention performs a completely random test and on which the definition of the password does not depend because it is prior to the test, unlike in US10587423B2 wherein the user has to perform a test that influences their password. In addition, in US10587423B2 the validation test depends on the volatility of the user's personality and the weight of changes in personality, while the present invention is totally unrelated to these factors. This means that the authentication method/test described in US10587423B2 does not remain the same over time and is not 100% accurate.
- With respect to the previous solution described in US11144629B2, wherein there is a graphic password based on a sequence that specifies an order to select each object, the advantageous difference of the present invention is that it is not necessary to identify graphic objects by coordinates or follow any order. In the present invention, the location of the graphics/images/... does not influence because access to the system does not depend on the coordinates/location of these data. In US11144629B2, authentication does not depend on whether or not the graphic objects previously selected by the user are part of the password, but on the coordinates of the objects.
- The validation method proposed herein can be combined with an OTP (one time password) type authentication to provide greater security.

These and other advantages are derived from the detailed description of the invention that is set forth below.

### BRIEF DESCRIPTION OF THE FIGURES

A series of drawings that help to better understand the invention and that are expressly related to an embodiment of said invention that is presented as a nonlimiting example thereof are described very briefly below.
FIGURE 1.- Shows a table with examples of keys that can be used for authentication, made up of elements selected from different types of characters and information units identifiable by a user.
FIGURE 2.- Shows a graphical representation of a randomly generated test for a user whose password is numerical, wherein the test comprises multiple groups for each step of the test, according to a possible embodiment of the invention.
FIGURE 3.- Shows a graphic representation of a randomly generated test for a user whose password is made up of numbers and graphic objects, wherein the test comprises a group per step and the user makes the selection by swiping, according to another possible embodiment of the invention.
FIGURE 4.- Shows a graphic representation of a randomly generated test for a user whose password is made up of words, wherein the test comprises a string of words per step forming a readable text and the user makes the selection by swiping, according to another possible embodiment of the invention.

### PREFERRED EMBODIMENT OF THE INVENTION

In an application example of the invention, it is required that the user, before using the user authentication validation method proposed in this invention, use a digital configuration platform, wherein the user can perform the following operations:
- Registration: the user creates an authentication pair consisting of an identifier and a key.
- Modification: the user can modify his/her password.
- Unsubscribe: the user can delete their identifier and password.

The prior registration of the user in the digital configuration platform allows him/her to generate an "identifier + password" pair, which constitutes authentication credentials that are later used by the authentication validation method proposed herein to generate a validation test, as described below.

To access the digital configuration platform, an authentication process is provided between a (remote) authentication server and a client device (every information system runs on a device, although it is really the information system itself, not the device itself, that interacts with the digital platform, for example, a web service). In order not to require the generation of a different or additional password, access to the platform can be performed, for example, with the platform's own "identifier + password" pair (corresponding to the credentials created to be used in the proposed method of this invention), by means of email accounts, biometric means, identifier of an official document of the user (which can also be electronic), etc.

Regarding the previous configuration of the key, which is later used in the method proposed herein, the definition of this parameter is detailed below
- The number of elements that make up the key can be one to N elements and can be selected by the user.
- Each of the N elements of the key can be chosen by the user between alphabetic characters between az and AZ, and/or numbers included in the XY range, being selectable by the user, from -infinity to +infinity. The key, therefore, is made up of N elements that can be alphabetic, numeric or alphanumeric, and additionally, symbols (@, $, %, &, #, etc.) can also be included as key elements to increase robustness from a statistical point of view.
- Likewise, in order to be an authentication system adapted to the intellectual/cognitive capacities of any user, the N elements that make up the key can be words, images, colors, sounds, textures, smells, shapes, or any other unit of information likely to be identifiable by a user.
- Regarding the alphabetic elements and words, these can be adapted to the casuistry of the writing systems/alphabets of each region/country where the authentication process will be used.
- Variable N referring to the number of elements of the key: when the user selects the number of elements N that make up the key, a notice is optionally displayed on the platform to inform about the robustness of the authentication process from a statistical point of view.
- Variables X and Y: when the user selects the range of numbers that the numeric elements of the key can take, a notice is optionally displayed on the platform to inform about the robustness of the authentication process from a statistical point of view.

Table 1 shows examples of generation of key including N=5 elements, X=0 and Y=50.

**Table 1**

| **TYPE** | **KEY** | | | | |
|---|---|---|---|---|---|
| **Alphabetic** | A | d | q | B | Z |
| **Numeric** | 45 | 21 | 33 | 13 | 36 |
| **Alphanumeric** | H | 49 | K | 13 | 6 |
| **Alphabetic + Symbols** | @ | d | q | B | Z |
| **Numeric + Symbols** | 45 | 21 | # | 13 | 36 |
| **Alphanumeric + Symbols** | H | 49 | $ | & | 6 |

Table 2 shows examples of generating keys of N=5 elements, each of the elements being other information units such as words and colors. For format reasons, the table names the colors; however, in a real implementation, in a graphical interface it would directly represent colors from a color palette from which the user can select which colors are elements of their key.

**Table 2**

| **TYPE** | **KEY** | | | | |
|---|---|---|---|---|---|
| **Words** | dog | Isabel | strain | barrel | john |
| **Colors** | Color | Color | Color | Color | Color |
| | BLACK | BROWN | RED | BLUE | GREEN |

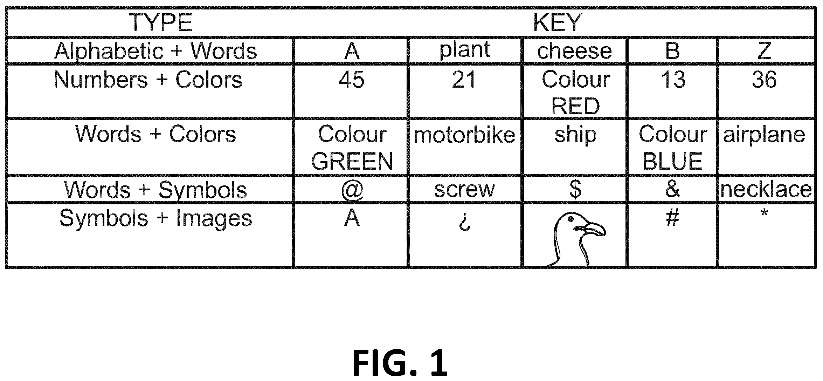

Figure 1 shows examples of generating a KEY made up of N=5 elements, each of the elements being a mixture of the cases seen in the previous tables, wherein different types of characters, symbols, words, colors and images are used. As in the previous table, for format reasons, Figure 1 shows the names of colors that, in a real implementation, are graphically represented on a device screen, for example.

The use of a graphical interface to display test elements, groups, and steps is just one example. Other examples of user interface for showing the generated test could show the elements of each group and step through sounds, smells, brain signals, etc. The user interface can thus display graphic objects (texts, images -fixed or moving-, different shapes, colors...) or reproduce audio signals, olfactory signals, sensor signals (neural,...); in short, show content elements that are adapted to be presented on a user interface (screen, audio players, peripherals, etc.) of the user terminal (on the client device) through which the user makes/answers to the test.

The validation and verification method of the authentication process that is proposed is based on a test for whose generation, in the first place, the user specifies his unique identifier (the identifier of the "identifier + key" pair of his/her previously configured credentials). Upon confirming the data, the information is sent to the remote authentication server, wherein, if the identifier does not match any record in the database, the user is notified and the authentication process ends. Otherwise, the authentication parameters (key) are retrieved, previously configured and associated with the identifier, which are processed by an algorithm whose result is the information necessary to build the test and show it to the user.

The user identifier is sent from the client side to a remote server, wherein the received identifier is compared with identifiers stored in a remote server database, identifiers defined prior to the generation of credentials. If the received identifier does not find a match in the remote server's database, a message is sent to the client device to indicate to the user that the authentication process has finished because the user's identifier does not exist. If the received identifier finds a match in the remote server's database, the key associated with the user identifier is retrieved to then invoke the test generation algorithm according to one of the possible implementation forms, such as the ones described below.

Below there are different ways in which the test can be presented to the user in a graphical user interface:
- Multigroup selection: the test generation algorithm defines P steps (P>=1) and, for each step, defines G groups (G>1) and, for each group, generates a number E (E>1) of elements with random values. Preferably, the E elements are generated with controlled randomness, in order to avoid security gaps from a statistical point of view; that is, they are generated randomly, but always under security standards from a statistical point of view, so that the algorithm, when building the test that a user answers, discards those combinations of randomly generated elements that, in together, may contravene or undermine the strength of the system, such as, for example, the repetition of the same element within the test.
Of the E randomly generated elements, some, or none, belong to the set of N elements that make up the key. That is, among the E random elements, it may be that at least one of them belongs to the set of elements that make up the user key, or it may be that none of them belongs to the set of elements that make up the key.
- Each Step-Group combination is assigned a unique token, so that the E elements generated can be uniquely associated with a test step and group, as shown in an example in Table 3.

**Table 3**

| Step | Group | Token | Element 1 | Element 2 | Element 3 | Element E |
|---|---|---|---|---|---|---|
| 1 | 1 | --------- | --- | --- | --- | --- |
| 1 | 2 | --------- | --- | --- | --- | --- |
| 1 | 3 | --------- | --- | --- | --- | --- |
| 1 | G | --------- | --- | --- | --- | --- |
| 2 | 1 | --------- | --- | --- | --- | --- |
| 2 | 2 | --------- | --- | --- | --- | --- |
| 2 | 3 | --------- | --- | --- | --- | --- |
| 2 | G | --------- | --- | --- | --- | --- |
| P | G | --------- | --- | --- | --- | --- |

Once the result of the algorithm is obtained, the information is returned to the client device (or system) that made the request and which communicates with the information system, wherein the data is transformed into a process with which the user can interact to perform the test and which consists of the presentation on the screen of the P steps defined for the test, presenting for each step the defined G groups, and in each group, its randomly generated E elements.

In each step, the user must indicate those groups that contain at least one element of their key, which can be 0, 1, 2, 3, ... or G, the number of groups that meet said condition in each step.

Once the test is finished, the summary of the user's answers is sent to a remote server, wherein it is verified that the answers are true for the user's identifier.

To provide greater security, the sending of this information to the server is not done in an unencrypted way, but the assigned "tokens" are used, that is, only the "token" associated with each group of each step and the user's answer are sent indicating whether or not the group in question contains any element of its key.

Once the information reaches the authentication server, each token is equivalent to the E elements that the user viewed during the test.

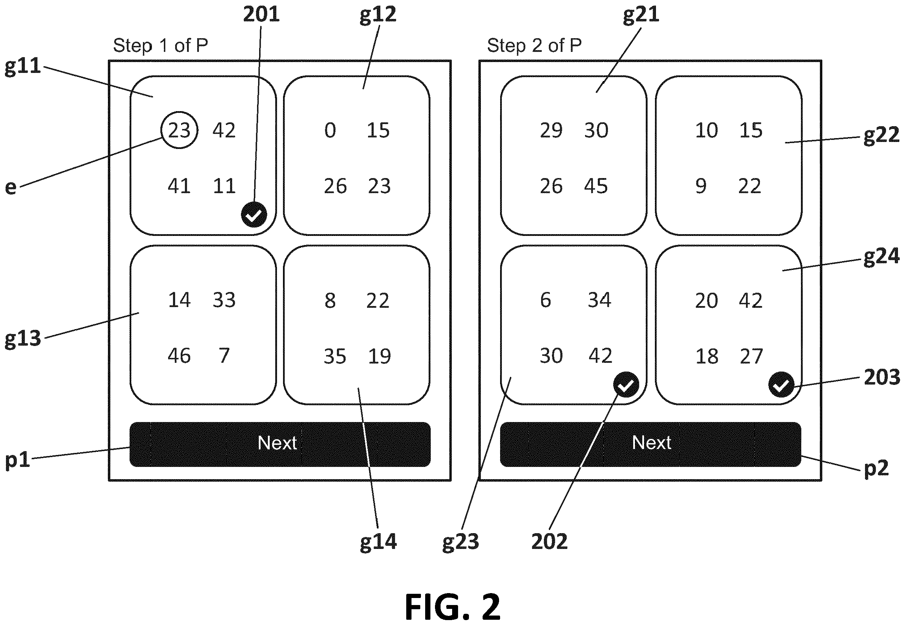

Figure 2 shows the graphic presentation of a test as an example, specifically for a user whose password is made up exclusively of numbers and a test with four groups for each step, wherein each group of each step shows four random elements generated for the test, wherein the generated elements displayed as content elements e are numbers. Figure 2 represents the four groups **g11, g12, g13, g14** of the first step **p₁** and the four groups **g21, g22, g23, g24** of the next (second) step **p₂**, of the P steps that the generated test has in total. In the example of Figure 2, the user has marked group **g11** with a **201** in the first step **p₁** and has marked groups g23 and g24 with **202,** 203 in the second step **p2** of the test, as groups where elements of his/her key between displayed e elements.
- A variant in this type of test is monogroup selection by sliding or "Swipe". The algorithm generates P steps (P>1) and, for each step, defines a single group (G=1) and, for the group of each step, generates E (E>1) random elements, wherein by virtue of controlled randomness security breaches are avoided from a statistical point of view. Of these E elements, some, or none, will be those that make up the key, as explained above: some of the E elements may belong to the set of elements that make up the key, but it may also be that none of them are from the set of elements that form the key. Each step is assigned a unique "token" so as to associate each step with the E elements generated (grouped in the single group of the step), as shown in an example in Table 4.

**Table 4**

| Step | Token | Element 1 | Element 2 | Element 3 | Element E |
|---|---|---|---|---|---|
| 1 | --------- | --- | --- | --- | --- |
| 2 | --------- | --- | --- | --- | --- |
| 3 | --------- | --- | --- | --- | --- |
| P | --------- | --- | --- | --- | --- |

Once the result of the algorithm is obtained, the information is returned to the client device from which the user made the request for authentication/access to the information system. Through the client device, upon transformation of data that have resulted from the previous algorithm into a test that can be represented in the user interface of the client device, a process of interaction with the user is carried out to obtain their answers to the test.

In the presentation of the test to the user, P steps are shown on the screen. At each step, E elements are presented on the screen of the user device. In each step, the user must perform a swipe to indicate if any of the E elements presented belongs to the key, and the answer may be "Yes/No". The swipe technique consists of encoding a user's binary answer ("Yes/No") depending on whether the user performs a gesture on the peripheral; for example, on a mobile device, dragging to the left of the screen corresponds to a "Yes" answer, and dragging to the right would correspond to a "No" answer.

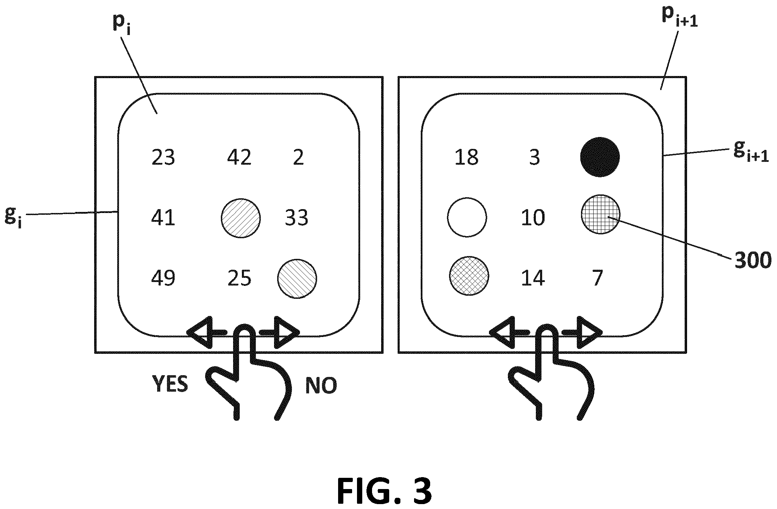

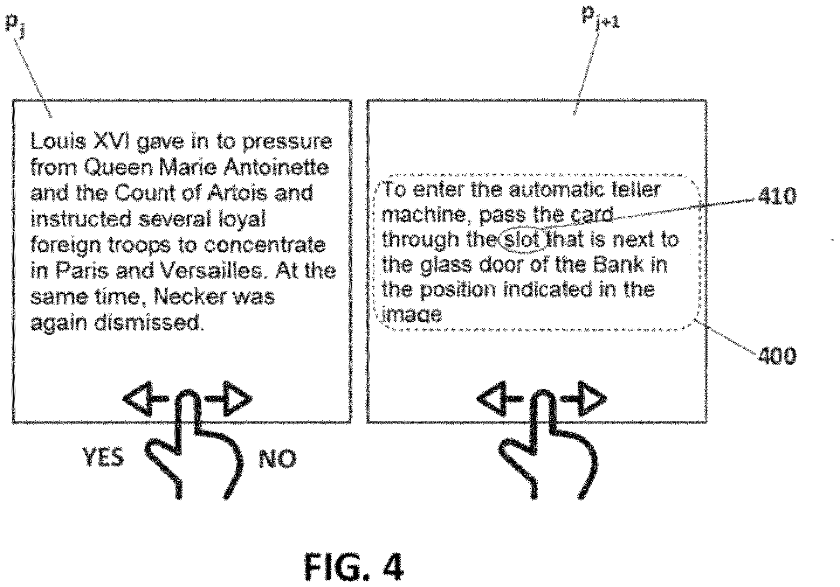

Figure 3 shows the graphic presentation of a test as an example, specifically for a user whose password is made up of numbers and graphic objects, which for reasons of format of the figures are represented as round shapes with different fillings; in this example, these circular shapes **300** are the elements of the content displayed on a graphical interface (screen of a computer, a phone or smart glasses). In a real implementation, the displayed graphical objects can be round shapes of different colors. The example test has nine elements generated by each step. Thus, in a step **pᵢ** a group **gᵢ** with nine elements is shown, some being numbers and others being round shapes, and in another (the next) step **pᵢ₊₁** a group **gi₊₁** including another nine elements is shown. The user swipes to the left if any of the nine elements displayed in the step / group corresponds to an element of his key, swiping to the right otherwise.
- Texts: In this embodiment variant, the previously configured password is made up of words (or combines words with other types of elements). Then, the algorithm generates P steps (P>1) and, for each step, as shown in Figure 4, a group or string of words that constitutes a random text 400 and that may or may not contain elements (i.e., words 410) that make up the key is presented as content elements in the user interface.

Once the result of the algorithm is obtained, the information is returned to the client device that made the request and the data is transformed into a process with which the user interacts to perform the test through the client device, representing on the screen P steps with one or several texts per step.

To provide greater security, the sending of information to the server, again, is not done in an unencrypted way, but by means of "tokens" assigned to each step, that is, to each generated text.

To answer the test, at each step, the user must indicate whether the text presented (for example, displayed on a screen and/or reproduced on an audio device in the client device interface so that the user can see and/or hear it; including text presentation by other mechanisms such as Braille involving tactile interaction, etc.) contains at least one element of its key (the text may also contain numbers or symbols, which may or may not be part of the key). For example, as shown in Figure 4, the user swipes to the left to indicate that the text of a **pⱼ** step contains any of the elements of the key, or swipes to the right if there are none of the elements of his/her key in the text and goes to the next step **pⱼ₊₁**

Once the test is finished, the summary of the user's answers is sent to the remote authentication server, wherein it is verified that the answers are true for the identifier associated with the user. Only the token associated with each step and the user's answer indicating whether or not the text in question contains any element of its key are sent. Once the information reaches the server, each token is equivalent to the text that the user viewed during the test.
- Dynamic: the algorithm generates a single step with an animation or video consisting of the presentation of elements moving across the screen of the user device. Therefore, the test consists of viewing the animation/video by the user, who dynamically, during viewing, must press on the screen or touch it at the moments in which he/she visualizes any of the elements that make up his/her key. In this way, the system collects the moments of time or frames of the animation/video in which the user has indicated that some element of his/her key appears. Once the test is finished, the summary of the user's answers is sent to the remote server, wherein it is verified that the answers are true for the identifier associated with the user.

Finally, for any variant of the generated random test implementation, if the server algorithm determines that the test responses for the identifier in question match the user's key, it returns an affirmative answer (test result = "correct") to the client device that generated the request by way of authorization and the information system is notified to allow access; otherwise, it returns a negative answer (test result = "incorrect") to the system and access to the user is not enabled.

All the examples of tests or authentication tests described can be performed on computers, devices and peripherals: mouse, keyboard, touch screen, voice commands, neurological commands, eye commands, virtual glasses, virtual environments, etc.

The verification of the test is always 100% accurate, so there is no interpretation of questions or answers. The result of the test ("correct" or "incorrect") is achieved once all the steps have been completed, that is, the user's answers are validated as a whole and not individually. This implies as an advantage that, if a hypothetical attacker made repeated attack attempts, he/she would never know if an element or group of elements indicated during the test is correct or not, he/she would only see the value of the result ("correct" or "incorrect").

In practical use cases, two operating modes can be distinguished:
- Integrated: the field to enter the identifier of the user to be authenticated and the execution of the test is done in the information system itself, and interacts with a remote server through web services, wherein the user identifier is verified, the test data is generated, and the answers are validated. Thus, the test is integrated into the information system of the client side that generates the user authentication request and the flow of information travels, using web services, from the client information system, wherein the user identifies himself/herself, to a remote server in which identification information is verified and test data is generated. The test data is returned to the initial client system where the test is created and executed. The user's test answers are then sent to the remote server again, wherein the user's responses are verified, and finally an answer (authorized/unauthorized) is returned to the client that originated the request.
- Non-Integrated: a user who wants to authenticate in an information system is redirected to a platform where he/she identifies himself/herself and performs the test and, once the process is finished, the user is redirected back to the information system indicating whether the user is authorized or not. That is, the information system of the client side, which generates the authentication request, redirects the user to an external platform, wherein the user performs the complete authentication process (which includes the identification of the user with his/her credentials and the answer to the test) and, once finished, the user is redirected back to the initial customer information system, notifying the result of the process.

The proposed method is more robust against cybersecurity attacks; more particularly:
- Avoids "man-in-the-middle" practices: if an attacker were to intercept the user's answers when the information traveled to the server, he/she would only see Token-YES/NO relationships, but would not get to know the elements of the key.
- Avoids brute force practices: given that the E elements of each of the G groups of each and every one of the P steps of a test are random in each generation of the test, if an attacker carried out repeated attacks against the system, statistically, it is practically impossible to follow an attack pattern. The calculation to calculate the improbability is performed in each case based on the key, number of steps and number of groups.
- Avoids "shoulder surfing" practices: if an attacker was observing the user while answering the test, he/she would not be able to identify which elements belong to the key among the elements of the groups marked by the user.
- Avoids "phishing" practices: in the event that an attacker uses test impersonation mechanisms, the answers given by the user would not help the attacker to know the password, neither partially nor in an unencrypted way, that is, he/she could only know a number of elements among which would be those that partially belong to the key, but could not know what they are.

Note that in this description, the term "comprise" and its derivations (such as "comprising", etc.) should not be understood in an exclusive sense, that is, these terms should not be interpreted in the sense that they exclude the possibility that what is described and defined may include other elements, steps, etc.

## Claims

1. A method for validating user authentication in an information system, wherein a user requests access from a client device, authenticating credentials generated through a unique user identifier and a key associated with the identifier, the key being defined as a set of elements, wherein each element is an independent information unit capable of being identifiable by the user,
the method comprising:
sending the user identifier from the client device to a remote server, wherein the identifier received on the remote server is compared with identifiers stored in a remote server database, the stored identifiers being defined prior to the generation of credentials;
and, if the comparison results in the received identifier matching one of the identifiers stored in the remote server's database, receiving the key associated with the user identifier;
the method being **characterized in that,** using the received key, the method further comprises:
- generating a test defined by data comprising a plurality of steps (p1, p2, pᵢ, pᵢ₊₁, pj, pj₊₁), at least one group (g11, g12, g13, g14, g21, g22, g23, g34, gᵢ, gᵢ₊ᵢ) for each step and a plurality of elements in each group, wherein the value of each element is randomly generated, wherein at least one of the elements of the group belongs to the set of elements that form the received key or wherein none of the elements of the group belong to the set of elements that form the received key;
- sending the test data from the remote server to the client device to transform the test data into content elements (e, 300, 400, 410) of an interface compatible with a user interface of the client device and presenting, in the user interface of the client device, the content elements that correspond to the steps, groups in each step and elements generated for each group of the test;
- obtaining user answers to the test, wherein the user indicates in an answer for each step of the test, through the user interface of the client device interacting with the content elements presented in each step, i) if there is at least one group of the step that meets the condition that at least one of the content elements in the group belongs to the set of elements that form the user's key, or otherwise, ii) if none of the groups of the step meets the previous condition;
- sending all the user's answers to the test to the remote server to compare the content elements in the groups indicated by the user in the answers with the elements of the key associated with the user's identifier; and
if in all the groups indicated in all the answers for each step there are one or more content elements that belong to the set of elements that form the key associated with the user's identifier, receiving an affirmative result of the test in the client device; otherwise, receiving a negative test result on the client device; and
if the result of the test received is affirmative, enabling the user to access the information system from the client device.

2. The method according to any of the preceding claims, **characterized by** further comprising assigning a unique token to each group of each step to uniquely associate the plurality of elements generated within the group with the test step that comprises the group of elements generated, and wherein sending the obtained test answers to the remote authentication server comprises sending only the unique tokens assigned to the groups indicated in the answers.

3. The method according to any of the preceding claims, **characterized in that** key elements are selected from alphabetic, numeric, alphanumeric characters, symbols, words, pictures, colors, sounds, textures, smells, and shapes.

4. The method according to any of the preceding claims, **characterized in that** access is requested to the information system that is a web page, a social network, an e-commerce server, an operating system, or a mobile application or any other system that requires the unequivocal authentication of a user.

5. The method according to any of the preceding claims, **characterized in that** access is requested from the client device which is a computer, laptop, tablet, smartphone, smart wearable accessory, or electronic device with a user interface.

6. The method according to any of the preceding claims, **characterized in that** the user's interaction with the content elements of the user interface is performed by means of a peripheral comprising a mouse, a keyboard, a touch screen, a voice receiver, a neurological command receptor, an eye command receptor, virtual glasses or a virtual environment.

7. The method according to any of the preceding claims, **characterized in that** the user interaction comprises displaying an animation displayed in a single step as a test with content elements that are graphical objects that display the generated elements moving around the user interface of the client device, wherein the user interface comprises a screen, and wherein the user provides an indication of times in the animation as an answer.

8. The method according to any of the preceding claims, **characterized in that** the user interaction comprises viewing and/or listening to a random text (400) generated at each step of the test, the text made up of words (410) which are the elements generated and displayed on the user interface comprising a graphical interface and/or or reproduced in an audio interface of the user interface.

9. The method according to any of the preceding claims, **characterized in that** the user interaction is by swiping on a touch screen of the client device, the user swipes across the screen the content element of the user interface that is a graphic object and that, for each step, corresponds to the group of generated elements shown in screen.

10. The method according to any of the preceding claims, **characterized in that** in the test generation the values of the elements are generated with controlled randomness.

11. The method according to claim 10, **characterized in that** combinations of randomly generated elements that include a repetition of the same element within the test are discarded in the test generation.
